# EUROPÄISCHE PATENTSCHRIFT

(11) **EP 2 726 344 B1**
(45) Veröffentlichungstag und Bekanntmachung des Hinweises auf die Patenterteilung: **07.08.2019**
(21) Anmeldenummer: 12730168.7
(22) Anmeldetag: 01.06.2012
(51) Int. Cl.: B60S 1/38

(54) **WISCHVORRICHTUNG, INSBESONDERE KRAFTFAHRZEUGSCHEIBENWISCHVORRICHTUNG**
WIPING DEVICE, IN PARTICULAR WIPING DEVICE FOR A MOTOR VEHICLE PANE
DISPOSITIF D'ESSUYAGE, EN PARTICULIER DISPOSITIF ESSUIE-GLACE DE VÉHICULE À MOTEUR

(30) Priorität: 28.06.2011 DE 102011078185
(43) Veröffentlichungstag der Anmeldung: 07.05.2014
(73) Patentinhaber: Robert Bosch GmbH, 70442 Stuttgart (DE)
(72) Erfinder: DEPONDT, Helmut, B-3010 Kessel-Lo (BE); BEX, Koen, B-3890 Jeuk/Limburg Belgien (BE); HERINCKX, Dirk, B-3350 Dries-Linter (BE)
(86) Internationale Anmeldenummer: PCT/EP2012/060323
(87) Internationale Veröffentlichungsnummer: WO 2013/000655

(56) Entgegenhaltungen:
- WO-A1-2009/065648
- DE-A1-102008 040 063
- US-A- 4 126 911
- US-A1- 2007 174 989
- US-A1- 2010 299 862

## Beschreibung

### Stand der Technik

Es ist bereits eine Wischvorrichtung, insbesondere eine Kraftfahrzeugscheibenwischvorrichtung, mit einer Halteeinheit, die ein Halteelement aufweist, bekannt, wobei das Halteelement eine Kederschiene umfasst, die dazu vorgesehen ist, eine Wischleiste formschlüssig aufzunehmen.

Aus der US 2010/299862 A1 ist weiterhin eine Wischvorrichtung mit den Merkmalen des Oberbegriffs bekannt.

### Offenbarung der Erfindung

Die Erfindung geht aus von einer Wischvorrichtung, insbesondere von einer Kraftfahrzeugscheibenwischvorrichtung, mit einer Halteeinheit, die ein Halteelement aufweist, wobei das Halteelement eine Kederschiene umfasst, die dazu vorgesehen ist, eine Wischleiste formschlüssig aufzunehmen.

Es wird vorgeschlagen, dass zumindest eine Vertikalwandung der Kederschiene mit zumindest einer Horizontalwandung der Kederschiene einen spitzen Winkel einschließt, wodurch eine Verwindungssteifigkeit des Halteelements vorteilhaft erhöht werden kann. Bevorzugt beträgt der Winkel weniger als 85°. Besonders bevorzugt beträgt der Winkel weniger als 80°. Unter einer "Halteeinheit" soll dabei in diesem Zusammenhang insbesondere eine Einheit verstanden werden, die dazu vorgesehen ist, ein Windabweiserelement mit einer Wischleiste zu verbinden. Unter einem "Halteelement" soll dabei in diesem Zusammenhang insbesondere ein Element verstanden werden, das dazu vorgesehen ist, ein Windabweiserelement, ein Federelement und eine Wischleiste formschlüssig zu verbinden. Unter einem "Federelement" soll in diesem Zusammenhang insbesondere ein federelastisches Element verstanden werden,
das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Wischleiste" soll in diesem Zusammenhang insbesondere eine Leiste verstanden werden, die dazu vorgesehen ist, eine Fahrzeugscheibe zu wischen. Bevorzugt ist die Wischleiste aus einem Gummimaterial ausgebildet. Unter einer "Vertikalwandung" soll in diesem Zusammenhang insbesondere eine Wandung verstanden werden, die sich zumindest im Wesentlichen senkrecht zu einer Wischrichtung erstreckt. Unter einer "Horizontalwandung" soll in diesem Zusammenhang insbesondere eine Wandung verstanden werden, die sich zumindest im Wesentlichen in einer Haupterstreckungskomponente parallel zu einer Wischrichtung und/oder zu einer von der Wischleiste zu wischenden Oberfläche erstreckt. Unter "zumindest im Wesentlichen" soll in diesem Zusammen insbesondere mit einer Abweichung von weniger als 45°, bevorzugt von weniger als 30° verstanden werden. Unter "vorgesehen" soll insbesondere speziell ausgelegt und/oder ausgestattet verstanden werden.

Erfindungsgemäß wird vorgeschlagen, dass die Wischvorrichtung eine Zwischenwandung aufweist, die an einen Längsführungskanal des Halteelements angrenzt und die zumindest eine Fläche umfasst, die sich parallel zu zumindest einer der Horizontalwandungen erstreckt, wodurch die Verwindungssteifigkeit weiter erhöht werden kann. Unter einem "Längsführungskanal" soll in diesem Zusammenhang insbesondere ein Führungskanal verstanden werden, der sich parallel zu einer Längsrichtung der Halteeinheit erstreckt. Bevorzugt umfasst der Längsführungskanal einen Freiraum sowie zumindest eine den Freiraum begrenzende Kanalwand. Unter einer "Längsrichtung" soll in diesem Zusammenhang insbesondere eine Richtung verstanden werden, die sich im Wesentlichen parallel zu einer Längserstreckung des Halteelements erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden.

Die Wischvorrichtung nach Anspruch 1 ist besonders stabil ausgeführt, da die Zwischenwandung zumindest drei Flächen aufweist, die zueinander zwei stumpfe Winkel einschließen.

Ferner wird vorgeschlagen, dass zumindest eine der drei Flächen in einem montierten Zustand an der Wischleiste formschlüssig anliegt, wodurch eine besonders große Anlagefläche für die Wischleiste, bei gleichzeitig kompaktem Aufbau der Halteeinheit erreicht werden kann.

Weist das Halteelement zumindest ein Befestigungsmittel auf, das mit einem freien Ende einem Längsführungskanal des Halteelements zugewandt und dazu vorgesehen ist, einen Formschluss mit einem Windabweiserelement zu bilden, kann eine besonders haltbare Verbindung zwischen einem Windabweiserelement und der Halteeinheit erreicht werden.

Ist ein Windabweiserelement in einem Extrusionsverfahren hergestellt, können vorteilhaft Produktionskosten eingespart werden.

Fugen in einem Hauptströmungsbereich des Windabweiserelements und/oder Geräusche und Strömungswiderstände können vermieden werden, wenn das Windabweiserelement am Halteelement im Bereich des Längsführungskanals zumindest teilweise seitlich anliegt.

In einer weiteren Ausgestaltung der Erfindung wird vorgeschlagen, dass das Windabweiserelement einen Längskanal aufweist, der einen dreieckigen Querschnitt aufweist, wodurch bei hoher Festigkeit Material und Gewicht des Halteelements eingespart werden können.

### Zeichnungen

Weitere Vorteile ergeben sich aus der folgenden Zeichnungsbeschreibung. In der Zeichnung sind 7 Ausführungsbeispiele der Erfindung dargestellt. Die Zeichnungen, die Beschreibung und die Ansprüche enthalten zahlreiche Merkmale in Kombination.

Es zeigen:
- Fig. 1: eine Schnittdarstellung einer Wischvorrichtung mit einer Halteeinheit,
- Fig. 2: eine Schnittdarstellung eines weiteren Ausführungsbeispiels einer Wischvorrichtung mit einer Halteeinheit,
- Fig. 3: eine Schnittdarstellung eines weiteren Ausführungsbeispiels einer Wischvorrichtung mit einer Halteeinheit,
- Fig. 4: eine Schnittdarstellung eines weiteren Ausführungsbeispiels einer Wischvorrichtung mit einer Halteeinheit,
- Fig. 5: eine Schnittdarstellung eines weiteren Ausführungsbeispiels einer Wischvorrichtung mit einer Halteeinheit,
- Fig. 6: eine Schnittdarstellung eines weiteren Ausführungsbeispiels einer Wischvorrichtung mit einer Halteeinheit und
- Fig. 7: eine Schnittdarstellung eines weiteren Ausführungsbeispiels einer Wischvorrichtung mit einer Halteeinheit.

### Beschreibung der Ausführungsbeispiele

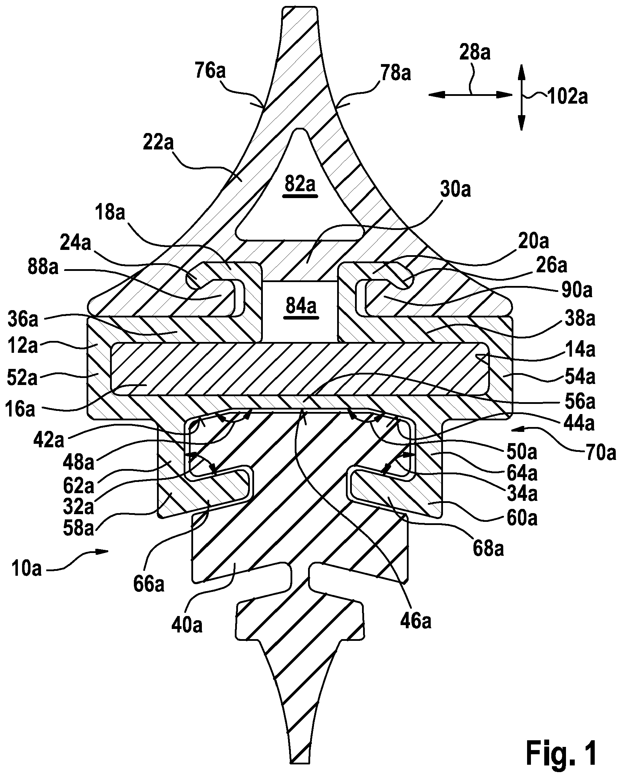

Figur 1 zeigt ein Ausführungsbeispiel einer erfindungsgemäßen Wischvorrichtung mit einer Halteeinheit 10a mit einem Halteelement 12a, das einen Längsführungskanal 14a zur Führung eines Federelements 16a aufweist, in einer Schnittdarstellung. Die Schnittebene verläuft senkrecht zu einer Längsrichtung des Halteelements 12a.

Das Halteelement 12a weist zwei Befestigungsmittel 18a, 20a auf. Die Befestigungsmittel 18a, 20a sind einstückig mit dem Halteelement 12a ausgebildet. Die Befestigungsmittel 18a, 20a weisen an ihren freien Enden 24a, 26a in voneinander abgewandte Richtungen. Ferner bilden die Befestigungsmittel 18a, 20a zwei Kanalwandungen 36a, 38a, die an den Längsführungskanal 14a an einer wischleistenabgewandten Seite angrenzen. Die Befestigungsmittel 18a, 20a sind im Bereich ihrer freien Enden 24a, 26a in Richtung des Längsführungskanals 14a abgeknickt. Die Enden 24a, 26a sind von einem Windabweiserelement 22a umschlossen. Dazu weist das Windabweiserelement 22a zwei Auflagekörper 88a, 90a auf.

Zur Führung des Federelements 16a grenzen Seitenwandungen 52a, 54a des Längsführungskanals 14a an die Kanalwandungen 36a, 38a. Die Kanalwandungen 36a, 38a schließen dabei einen rechten Winkel mit den Seitenwandungen 52a, 54a ein. An die Seitenwandungen 52a, 54a ist ferner eine Zwischenwandung 56a angeordnet, die den Längsführungskanal 14a in Richtung einer Wischleiste 40a abschließt. Die Seitenwandungen 52a, 54a erstrecken sich von der Zwischenwandung 56a aus in eine von der Wischleiste 40a abgewandte Richtung. Das Halteelement 12a weist eine Längsöffnung 84a auf, die den Längsführungskanal 14a zum Windabweiserelement 22a hin öffnet.

An der Zwischenwandung 56a ist eine Kederschiene 70a angeordnet, die zwei Führungsprofile 58a, 60a umfasst. Die Führungsprofile 58a, 60a sind einstückig mit dem Halteelement 12a ausgebildet. Die Führungsprofile 58a, 60a weisen jeweils eine Vertikalwandung 62a, 64a und jeweils eine Horizontalwandung 66a, 68a auf. Die Horizontalwandungen 66a, 68a schließen mit den Vertikalwandungen 62a, 64a jeweils einen spitzen Winkel 32a, 34a von 77° ein. Die Vertikalwandungen 62a, 64a schließen jeweils einen Winkel von 90° zur Zwischenwandung 56a ein. Die Führungsprofile 58a, 60a weisen an ihren freien Enden der Horizontalwandungen 66a, 68a in einander zugewandte Richtungen.

Die Zwischenwandung 56a grenzt an den Längsführungskanal 14a des Halteelements 12a an und umfasst zwei Flächen 42a, 44a, die sich jeweils parallel zu einer der Horizontalwandungen 66a, 68a erstrecken. Die zwei Flächen 42a, 44a grenzen jeweils an eine dritte Fläche 46a an, die zwischen den Flächen 42a, 44a angeordnet ist. Die Flächen 42a, 44a schließen jeweils einen stumpfen Winkel 48a, 50a mit der dritten Fläche 46a von 167° ein.

Das Windabweiserelement 22a ist in einem Extrusionsverfahren hergestellt. Das Windabweiserelement 22a weist zwei nach außen hin konkav ausgebildete Windabweiserseiten 76a, 78a auf. Zur Verstärkung des Windabweiserelements 22a ist ein Verbindungssteg 30a vorgesehen, der die konkaven Windabweiserseiten 76a, 78a miteinander verbindet. Der Verbindungssteg 30a und die Windabweiserseiten 76a, 78a sind stoffschlüssig miteinander verbunden und umschließen einen Längskanal 82a, der einen dreieckigen Querschnitt aufweist.

Das Windabweiserelement 22a ist zur Abweisung von Fahrtwind vorgesehen. Das Windabweiserelement 22a formt die Auflagekörper 88a, 90a. Die Auflagekörper 88a, 90a liegen an den Kanalwandungen 36a, 38a und an den Befestigungsmitteln 18a, 20a formschlüssig an. Das Windabweiserelement 22a umgibt die Befestigungsmittel 18a, 20a formschlüssig.

Das Halteelement 12a ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid und/oder Polystyrol.

Das Federelement 16a ist aus einem Federstahl hergestellt und dazu vorgesehen, die Halteeinheit 10a elastisch auslenkbar zu formen. Zu einer Montage wird zunächst das Federelement 16a in den Längsführungskanal 14a eingeführt. Anschließend wird die Wischleiste 40a in die Kederschiene 70a eingeschoben und bildet einen Formschluss mit dem Halteelement 12a. Die Flächen 42a, 44a, 46a liegen an der Wischleiste 40a formschlüssig an. Das Windabweiserelement 22a wird nun über die Befestigungsmittel 18a, 20a geschoben und ist dann formschlüssig mit diesen verbunden.

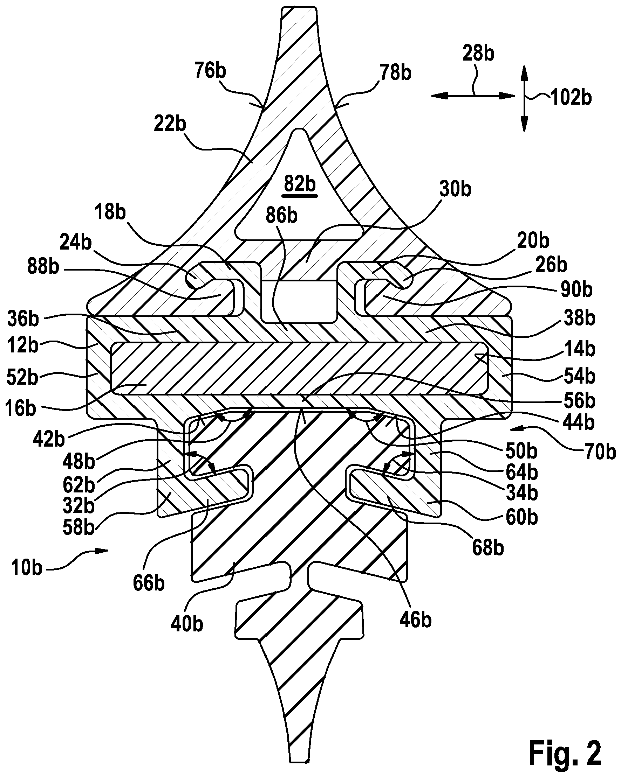

In den Figuren 2 bis 7 sind sechs weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in der Figur 1 durch die Buchstaben b bis g in den Bezugszeichen der Ausführungsbeispiele der Figuren 2 bis 7 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Figur 2 zeigt ein weiteres Ausführungsbeispiel einer erfindungsgemäßen Wischvorrichtung mit einer Halteeinheit 10b mit einem Halteelement 12b, das einen Längsführungskanal 14b zur Führung eines Federelements 16b aufweist, in einer Schnittdarstellung. Die Schnittebene verläuft senkrecht zu einer Längsrichtung des Halteelements 12b.

Das Halteelement 12b weist zwei Befestigungsmittel 18b, 20b auf. Die Befestigungsmittel 18b, 20b sind einstückig mit dem Halteelement 12b ausgebildet. Die Befestigungsmittel 18b, 20b weisen an ihren freien Enden 24b, 26b in voneinander abgewandte Richtungen. Ferner bilden die Befestigungsmittel 18b, 20b zwei Kanalwandungen 36b, 38b, die an den Längsführungskanal 14b an einer wischleistenabgewandten Seite angrenzen. Die Befestigungsmittel 18b, 20b sind im Bereich ihrer freien Enden 24b, 26b in Richtung des Längsführungskanals 14b abgeknickt. Die Enden 24b, 26b sind von einem Windabweiserelement 22b umschlossen. Dazu weist das Windabweiserelement 22b zwei Auflagekörper 88b, 90b auf.

Zur Führung des Federelements 16b grenzen Seitenwandungen 52b, 54b des Längsführungskanals 14b an die Kanalwandungen 36b, 38b. Die Kanalwandungen 36b, 38b schließen dabei einen rechten Winkel mit den Seitenwandungen 52b, 54b ein. An die Seitenwandungen 52b, 54b ist ferner eine Zwischenwandung 56b angeordnet, die den Längsführungskanal 14b in Richtung einer Wischleiste 40b abschließt. Die Seitenwandungen 52b, 54b erstrecken sich von der Zwischenwandung 56b aus in eine von der Wischleiste 40b abgewandte Richtung. Eine zweite Zwischenwandung 86b schließt den Längsführungskanal 14b in Richtung des Windabweiserelements 22b ab. Damit ist der Längsführungskanal 14b vollständig umschlossen.

An der Zwischenwandung 56b ist eine Kederschiene 70b angeordnet, die zwei Führungsprofile 58b, 60b umfasst. Die Führungsprofile 58b, 60b sind einstückig mit dem Halteelement 12b ausgebildet. Die Führungsprofile 58b, 60b weisen jeweils eine Vertikalwandung 62b, 64b und jeweils eine Horizontalwandung 66b, 68b auf. Die Horizontalwandungen 66b, 68b schließen mit den Vertikalwandungen 62b, 64b jeweils einen spitzen Winkel 32b, 34b von 77° ein. Die Vertikalwandungen 62b, 64b schließen jeweils einen Winkel von 90° zur Zwischenwandung 56b ein. Die Führungsprofile 58b, 60b weisen an ihren freien Enden der Horizontalwandungen 66b, 68b in einander zugewandte Richtungen.

Die Zwischenwandung 56b grenzt an den Längsführungskanal 14b des Halteelements 12b an und umfasst zwei Flächen 42b, 44b, die sich jeweils parallel zu einer der Horizontalwandungen 66b, 68b erstrecken. Die zwei Flächen 42b, 44b grenzen jeweils an eine dritte Fläche 46b an, die zwischen den Flächen 42b, 44b angeordnet ist. Die Flächen 42b, 44b schließen jeweils einen stumpfen Winkel 48b, 50b mit der dritten Fläche 46b von 167° ein.

Das Windabweiserelement 22b ist in einem Extrusionsverfahren hergestellt. Das Windabweiserelement 22b weist zwei nach außen hin konkav ausgebildete Windabweiserseiten 76b, 78b auf. Zur Verstärkung des Windabweiserelements 22b ist ein Verbindungssteg 30b vorgesehen, der die konkaven Windabweiserseiten 76b, 78b miteinander verbindet. Der Verbindungssteg 30b und die Windabweiserseiten 76b, 78b sind stoffschlüssig miteinander verbunden und umschließen einen Längskanal 82b, der einen dreieckigen Querschnitt aufweist.

Das Windabweiserelement 22b ist zur Abweisung von Fahrtwind vorgesehen. Das Windabweiserelement 22b formt die Auflagekörper 88b, 90b. Die Auflagekörper 88b, 90b liegen an den Kanalwandungen 36b, 38b und an den Befestigungsmitteln 18b, 20b formschlüssig an. Das Windabweiserelement 22b umgibt die Befestigungsmittel 18b, 20b formschlüssig.

Das Halteelement 12b ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid und/oder Polystyrol.

Das Federelement 16b ist aus einem Federstahl hergestellt und dazu vorgesehen, die Halteeinheit 10b elastisch auslenkbar zu formen. Zu einer Montage wird zunächst das Federelement 16b in den Längsführungskanal 14b eingeführt. Anschließend wird die Wischleiste 40b in die Kederschiene 70b eingeschoben und bildet einen Formschluss mit dem Halteelement 12b. Die Flächen 42b, 44b, 46b liegen an der Wischleiste 40b formschlüssig an. Das Windabweiserelement 22b wird nun über die Befestigungsmittel 18b, 20b geschoben und ist dann formschlüssig mit diesen verbunden.

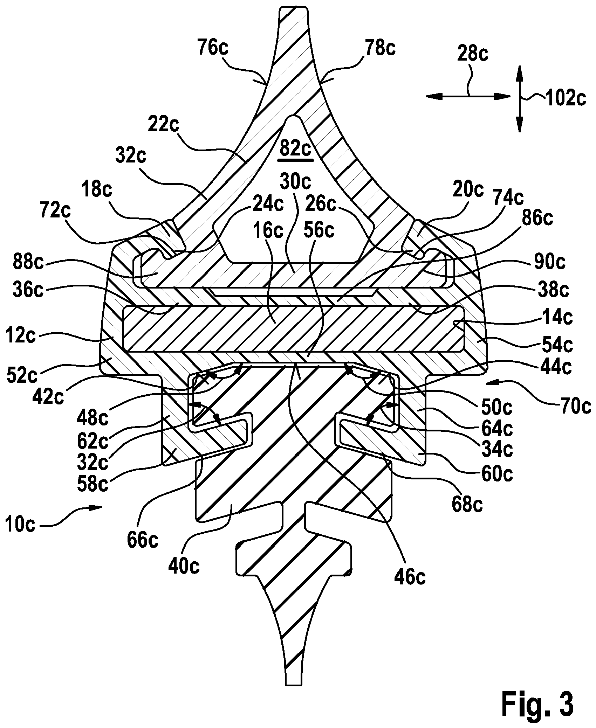

Figur 3 zeigt eine erfindungsgemäße Wischvorrichtung mit einer Halteeinheit 10c mit einem Halteelement 12c, das einen Längsführungskanal 14c zur Führung eines Federelements 16c aufweist, sowie ein Windabweiserelement 22c in einer Schnittdarstellung. Die Schnittebene verläuft senkrecht zu einer Längsrichtung des Halteelements 12c.

Zur Führung des Federelements 16c weist der Längsführungskanal 14c Seitenwandungen 52c, 54c auf. An die Seitenwandungen 52c, 54c ist ferner eine Zwischenwandung 56c angeordnet, die den Längsführungskanal 14c in Richtung einer Wischleiste 40c abschließt. Die Seitenwandungen 52c, 54c erstrecken sich von der Zwischenwandung 56c aus in eine von der Wischleiste 40c abgewandte Richtung. Eine zweite Zwischenwandung 86c schließt den Längsführungskanal 14c in Richtung des Windabweiserelements 22c ab. Damit ist der Längsführungskanal 14c vollständig umschlossen. An den Seitenwandungen 52c, 54c ist jeweils ein Befestigungsmittel 18c, 20c angeformt, das jeweils mit einem freien Ende 24c, 26c dem Längsführungskanal 14c zugewandt ist. Die Befestigungsmittel 18c, 20c sind L-förmig ausgebildet und grenzen an die Seitenwandungen 52c, 54c mit einem stumpfen Winkel von 60° an.

An der Zwischenwandung 56c ist eine Kederschiene 70c angeordnet, die zwei Führungsprofile 58c, 60c umfasst. Die Führungsprofile 58c, 60c sind einstückig mit dem Halteelement 12c ausgebildet. Die Führungsprofile 58c, 60c weisen jeweils eine Vertikalwandung 62c, 64c und jeweils eine Horizontalwandung 66c, 68c auf. Die Horizontalwandungen 66c, 68c schließen mit den Vertikalwandungen 62c, 64c jeweils einen spitzen Winkel 32c, 34c von 77° ein. Die Vertikalwandungen 62c, 64c schließen jeweils einen Winkel von 90° zur Zwischenwandung 56c ein. Die Führungsprofile 58c, 60c weisen an ihren freien Enden der Horizontalwandungen 66c, 68c in einander zugewandte Richtungen.

Die Zwischenwandung 56c grenzt an den Längsführungskanal 14c des Halteelements 12c an und umfasst zwei Flächen 42c, 44c, die sich jeweils parallel zu einer der Horizontalwandungen 66c, 68c erstrecken. Die zwei Flächen 42c, 44c grenzen jeweils an eine dritte Fläche 46c an, die zwischen den Flächen 42c, 44c angeordnet ist. Die Flächen 42c, 44c schließen jeweils einen stumpfen Winkel 48c, 50c mit der dritten Fläche 46c von 167° ein.

Das Windabweiserelement 22c weist zwei nach außen hin konkav ausgebildete Windabweiserseiten 76c, 78c auf. Zur Verstärkung des Windabweiserelements 22c ist ein Verbindungssteg 30c vorgesehen, der die konkaven Windabweiserseiten 76c, 78c miteinander verbindet. Der Verbindungssteg 30c und die Windabweiserseiten 76c, 78c sind stoffschlüssig miteinander verbunden und begrenzen einen Längskanal 82c, der einen dreieckigen Querschnitt aufweist.

Das Windabweiserelement 22c ist zur Abweisung von Fahrtwind vorgesehen. Zwei Auflagekörper 88c, 90c sind von dem Windabweiserelement 22c ausgebildet. Die Auflagekörper 88c, 90c liegen an Kanalwandungen 36c, 38c und an den Befestigungsmitteln 18c, 20c formschlüssig an. Das Windabweiserelement 22c umgibt die Befestigungsmittel 18c, 20c formschlüssig. Das Windabweiserelement 22c weist zwei Befestigungsnuten 72c, 74c auf, die jeweils einen Formschluss mit den Befestigungsmitteln 18a, 20a bilden.

Das Halteelement 12c ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid und/oder Polystyrol. Das Federelement 16c ist aus einem Federstahl hergestellt und dazu vorgesehen, die Halteeinheit 10c elastisch auslenkbar zu formen.

Zu einer Montage wird zunächst das Federelement 16c in den Längsführungskanal 14c eingeführt. Anschließend wird die Wischleiste 40c in die Kederschiene 70c eingeschoben und bildet einen Formschluss mit dem Halteelement 12c. Die Flächen 42c, 44c, 46c liegen an der Wischleiste 40c formschlüssig an. Das Windabweiserelement 22c wird nun über die Befestigungsmittel 18c, 20c geschoben und ist dann formschlüssig mit diesen verbunden.

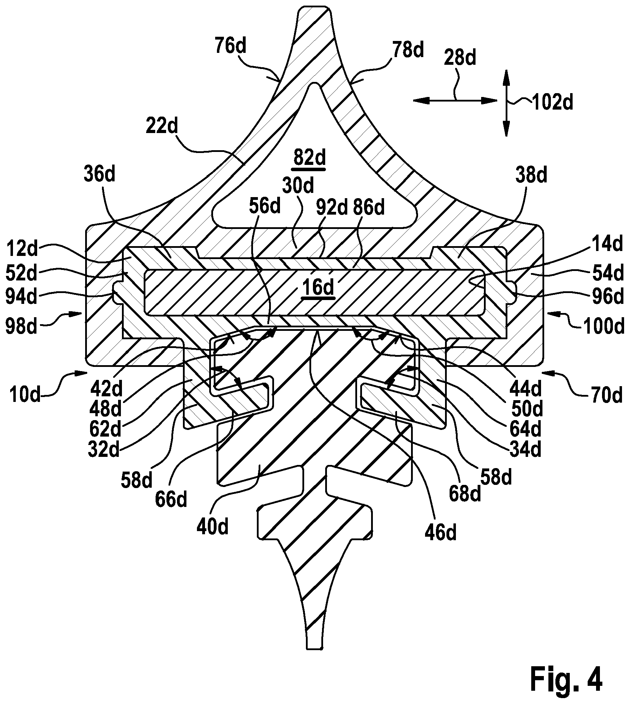

Figur 4 zeigt ein weiteres Ausführungsbeispiel einer erfindungsgemäßen Wischvorrichtung mit einer Halteeinheit 10d mit einem Halteelement 12d, das einen Längsführungskanal 14d zur Führung eines Federelements 16d aufweist, sowie mit einem Windabweiserelement 22d in einer Schnittdarstellung. Die Schnittebene verläuft senkrecht zu einer Längsrichtung des Halteelements 12d.

Zur Führung des Federelements 16d weist der Längsführungskanal 14d Seitenwandungen 52d, 54d auf. An die Seitenwandungen 52d, 54d ist ferner eine Zwischenwandung 56d angeordnet, die den Längsführungskanal 14d in Richtung einer Wischleiste 40d abschließt. Die Seitenwandungen 52d, 54d erstrecken sich von der Zwischenwandung 56d aus in eine von der Wischleiste 40d abgewandte Richtung. Eine zweite Zwischenwandung 86d schließt den Längsführungskanal 14d in Richtung des Windabweiserelements 22d ab. Damit ist der Längsführungskanal 14d vollständig umschlossen. An den Seitenwandungen 52d, 54d ist jeweils eine Seitenleiste 94d, 96d angeformt.

An der Zwischenwandung 56d ist eine Kederschiene 70d angeordnet, die zwei Führungsprofile 58d, 60d umfasst. Die Führungsprofile 58d, 60a sind einstückig mit dem Halteelement 12d ausgebildet. Die Führungsprofile 58d, 60d weisen jeweils eine Vertikalwandung 62d, 64d und jeweils eine Horizontalwandung 66d, 68d auf. Die Horizontalwandungen 66d, 68d schließen mit den Vertikalwandungen 62d, 64d jeweils einen spitzen Winkel 32d, 34d von 77° ein. Die Vertikalwandungen 62d, 64d schließen jeweils einen Winkel von 90° zur Zwischenwandung 56d ein. Die Führungsprofile 58d, 60d weisen an ihren freien Enden der Horizontalwandungen 66d, 68d in einander zugewandte Richtungen.

Die Zwischenwandung 56d grenzt an den Längsführungskanal 14d des Halteelements 12d an und umfasst zwei Flächen 42d, 44d, die sich jeweils parallel zu einer der Horizontalwandungen 66d, 68d erstrecken. Die zwei Flächen 42d, 44d grenzen jeweils an eine dritte Fläche 46d an, die zwischen den Flächen 42d, 44d angeordnet ist. Die Flächen 42d, 44d schließen jeweils einen stumpfen Winkel 48d, 50d mit der dritten Fläche 46d von 167° ein.

Das Windabweiserelement 22d ist in einem Extrusionsverfahren hergestellt. Das Windabweiserelement 22d weist zwei nach außen hin konkav ausgebildete Windabweiserseiten 76d, 78d auf. Zur Verstärkung des Windabweiserelements 22d ist ein Verbindungssteg 30d vorgesehen, der die konkaven Windabweiserseiten 76d, 78d miteinander verbindet. Der Verbindungssteg 30d und die Windabweiserseiten 76d, 78d sind stoffschlüssig miteinander verbunden und umschließen einen Längskanal 82d, der einen dreieckigen Querschnitt aufweist.

Das Windabweiserelement 22d ist zur Abweisung von Fahrtwind vorgesehen. Das Windabweiserelement 22d umgibt die Befestigungsmittel 18d, 20d formschlüssig. Der Verbindungssteg 30d ist teilweise in eine Ausnehmung 92d der zweiten Zwischenwandung 86d eingelassen und bildet somit mit der zweiten Zwischenwandung 86d einen in eine Wischrichtung 28d wirkenden Formschluss. Das Windabweiserelement 22d liegt am Halteelement 12d im Bereich des Längsführungskanals 14d seitlich an.

Das Halteelement 12d ist einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid und/oder Polystyrol.

Das Federelement 16d ist in den Längsführungskanal 14d eingelassen. Das Federelement 16d ist aus einem Federstahl hergestellt und dazu vorgesehen, die Halteeinheit 10d elastisch auslenkbar zu formen.

Zu einer Montage wird zunächst das Federelement 16d in den Längsführungskanal 14d eingeführt. Anschließend wird die Wischleiste 40d in die Kederschiene 70d eingeschoben und bildet einen Formschluss mit dem Halteelement 12d. Das Windabweiserelement 22d wird nun über das Halteelement 12d geschoben und ist dann formschlüssig mit diesem verbunden.

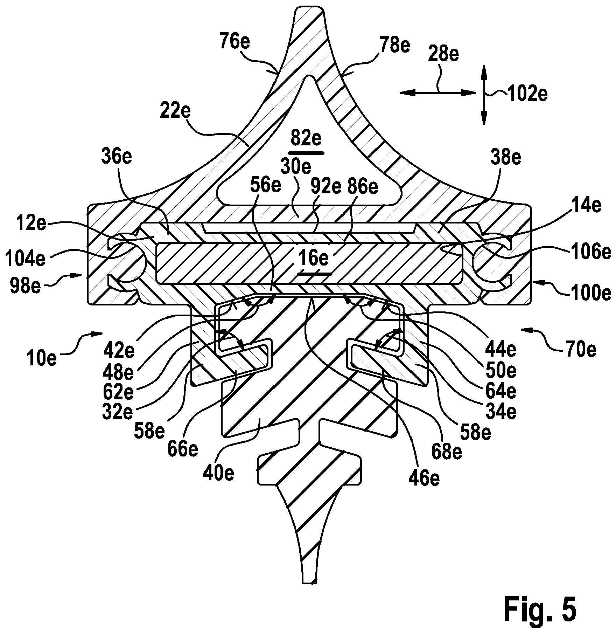

Figur 5 zeigt ein weiteres Ausführungsbeispiel einer erfindungsgemäßen Wischvorrichtung mit einer Halteeinheit 10e mit einem Halteelement 12e, das einen Längsführungskanal 14e zur Führung eines Federelements 16e aufweist, sowie mit einem Windabweiserelement 22e in einer Schnittdarstellung. Die Schnittebene verläuft senkrecht zu einer Längsrichtung des Halteelements 12e.

Zur Führung des Federelements 16e weist der Längsführungskanal 14e Seitenwandungen 52e, 54e auf. An die Seitenwandungen 52e, 54e ist ferner eine Zwischenwandung 56e angeordnet, die den Längsführungskanal 14e in Richtung einer Wischleiste 40e abschließt. Die Seitenwandungen 52e, 54e erstrecken sich von der Zwischenwandung 56e aus in eine von der Wischleiste 40e abgewandte Richtung. Eine zweite Zwischenwandung 86e schließt den Längsführungskanal 14e in Richtung des Windabweiserelements 22e ab. Damit ist der Längsführungskanal 14e vollständig umschlossen. In den Seitenwandungen 52e, 54e ist jeweils in einem Seitenbereich 98e, 100e ein Hinterschnitt 104e, 106e angeordnet, der das Windabweiserelement 22e in einer Wischrichtung 28e formschlüssig mit dem Halteelement 12e verbindet. Die Hinterschnitte 104e, 106e sind c-förmig ausgebildet und weisen einen sich zu einer Öffnung hin verjüngenden Querschnitt auf.

An der Zwischenwandung 56e ist eine Kederschiene 70e angeordnet, die zwei Führungsprofile 58e, 60e umfasst. Die Führungsprofile 58e, 60a sind einstückig mit dem Halteelement 12e ausgebildet. Die Führungsprofile 58e, 60e weisen jeweils eine Vertikalwandung 62e, 64e und jeweils eine Horizontalwandung 66e, 68e auf. Die Horizontalwandungen 66e, 68e schließen mit den Vertikalwandungen 62e, 64e jeweils einen spitzen Winkel 32e, 34e von 77° ein. Die Vertikalwandungen 62e, 64e schließen jeweils einen Winkel von 90° zur Zwischenwandung 56e ein. Die Führungsprofile 58e, 60e weisen an ihren freien Enden der Horizontalwandungen 66e, 68e in einander zugewandte Richtungen.

Die Zwischenwandung 56e grenzt an den Längsführungskanal 14e des Halteelements 12e an und umfasst zwei Flächen 42e, 44e, die sich jeweils parallel zu einer der Horizontalwandungen 66e, 68e erstrecken. Die zwei Flächen 42e, 44e grenzen jeweils an eine dritte Fläche 46e an, die zwischen den Flächen 42e, 44e angeordnet ist. Die Flächen 42e, 44e schließen jeweils einen stumpfen Winkel 48e, 50e mit der dritten Fläche 46e von 167° ein.

Das Windabweiserelement 22e ist in einem Extrusionsverfahren hergestellt. Das Windabweiserelement 22e weist zwei nach außen hin konkav ausgebildete Windabweiserseiten 76e, 78e auf. Zur Verstärkung des Windabweiserelements 22e ist ein Verbindungssteg 30e vorgesehen, der die konkaven Windabweiserseiten 76e, 78e miteinander verbindet. Der Verbindungssteg 30e und die Windabweiserseiten 76e, 78e umschließen einen Längskanal 82e, der einen im Wesentlichen dreieckigen Querschnitt aufweist.

Das Windabweiserelement 22e ist zur Abweisung von Fahrtwind vorgesehen. Das Windabweiserelement 22e liegt am Halteelement 12e im Bereich des Längsführungskanals 14e seitlich formschlüssig an. Das Windabweiserelement 22e liegt ferner im Bereich des Längsführungskanals 14e an einer Seite des Halteelements 12e an, die der Wischleiste 40e zugewandt ist. Das Windabweiserelement 22e liegt somit formschlüssig im Bereich des Längsführungskanals 14e am Halteelement 12e an und umgreift den Längsführungskanal 14e. Dabei greift das Windabweiserelement 22e in die Hinterschnitte 104e, 106e ein und füllt diese komplett aus. Somit bildet das Halteelement 12e in den Seitenbereichen 98e, 100e einen in die Wischrichtung 28e und in eine Vertikalrichtung 102e wirkenden Formschluss mit dem Windabweiserelement 22e.

Das Halteelement 12e ist einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid und/oder Polystyrol.

Das Federelement 16e ist in den Längsführungskanal 14e eingelassen. Das Federelement 16e ist aus einem Federstahl hergestellt und dazu vorgesehen, die Halteeinheit 10e elastisch auslenkbar zu formen.

Zu einer Montage wird zunächst das Federelement 16e in den Längsführungskanal 14e eingeführt. Anschließend wird die Wischleiste 40e in die Kederschiene 70e eingeschoben und bildet einen Formschluss mit dem Halteelement 12e. Die Windabweiserelement 22e wird nun über das Halteelement 12e geschoben und ist dann formschlüssig mit diesem verbunden.

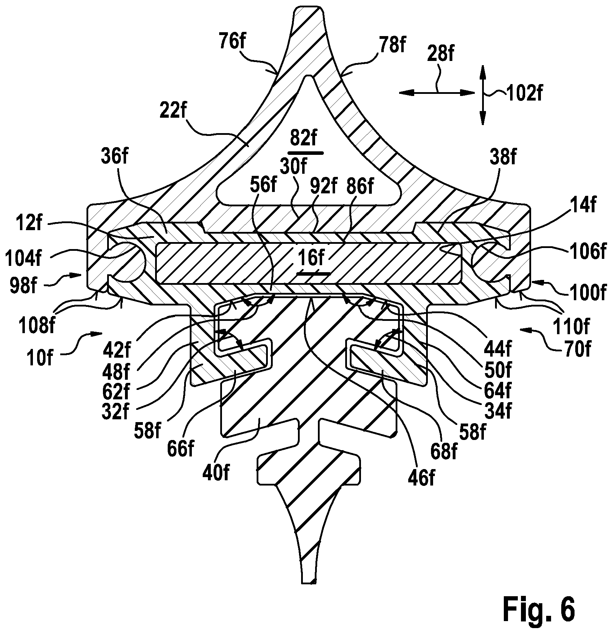

Figur 6 zeigt ein weiteres Ausführungsbeispiel einer erfindungsgemäßen Wischvorrichtung mit einer Halteeinheit 10f mit einem Halteelement 12f, das einen Längsführungskanal 14f zur Führung eines Federelements 16f aufweist, sowie mit einem Windabweiserelement 22f in einer Schnittdarstellung. Die Schnittebene verläuft senkrecht zu einer Längsrichtung des Halteelements 12f.

Die Wischvorrichtung entspricht im Wesentlichen dem in Figur 5 gezeigten Ausführungsbeispiel.

In jeweils einem Seitenbereich 98f, 100f weisen das Halteelement 12f und das Windabweiserelement 22f eine Fläche 108f, 110f auf, die sich parallel zu einer Horizontalwandung 66f, 68f einer Kederschiene 70f des Halteelements 12f erstreckt. Mit einer Wischrichtung 28f schließt die Fläche 108f, 110f jeweils einen Winkel von 13° ein.

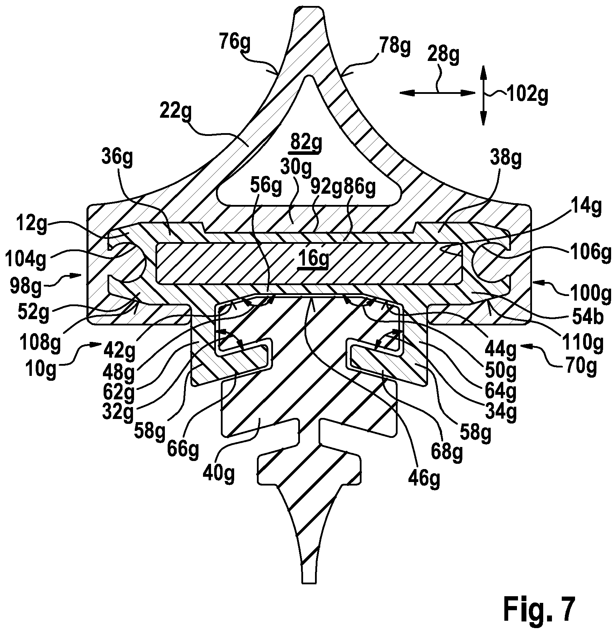

Figur 7 zeigt ein weiteres Ausführungsbeispiel einer erfindungsgemäßen Wischvorrichtung mit einer Halteeinheit 10g mit einem Halteelement 12g, das einen Längsführungskanal 14g zur Führung eines Federelements 16g aufweist, sowie mit einem Windabweiserelement 22g in einer Schnittdarstellung. Die Schnittebene verläuft senkrecht zu einer Längsrichtung des Halteelements 12g. Die Wischvorrichtung entspricht im Wesentlichen dem in Figur 6 gezeigten Ausführungsbeispiel.

In jeweils einem Seitenbereich 98g, 100g weist das Halteelement 12g eine Fläche 108g, 110g auf, die sich parallel zu einer Horizontalwandung 66g, 68g einer Kederschiene 70g des Halteelements 12g erstreckt. Mit einer Wischrichtung 28g schließt die Fläche 108g, 110g jeweils einen Winkel von 13° ein.

Das Windabweiserelement 22g liegt im Bereich des Längsführungskanals 14g an einer Seite des Halteelements 12g an, die einer Wischleiste 40g zugewandt ist. Dabei liegt das Windabweiserelement 22g ebenfalls formschlüssig an den Flächen 108g, 110g des Halteelements 12g an. Das Windabweiserelement 22g liegt ferner an Vertikalwandungen 62g, 64g der Kederschiene 70g an.

## Patentansprüche

1. Wischvorrichtung, insbesondere Kraftfahrzeugscheibenwischvorrichtung, mit einer Halteeinheit (10a - 10g), die ein Halteelement (12a - 12g) aufweist, wobei das Halteelement (12a - 12g) eine Kederschiene (70a - 70g) umfasst, die dazu vorgesehen ist, eine Wischleiste (40a - 40g) formschlüssig aufzunehmen, wobei zumindest eine Vertikalwandung (62a - 62g, 64a - 64g) der Kederschiene (70a - 70g) mit zumindest einer Horizontalwandung (66a - 66g, 68a - 68g) der Kederschiene (70a - 70g) einen spitzen Winkel (32a - 32g, 34a - 34g) einschließt, **gekennzeichnet durch** eine Zwischenwandung (56a - 56g), die an einen Längsführungskanal (14a - 14g) des Halteelements (12a - 12g) angrenzt und die zumindest eine Fläche (42a - 42g, 44a - 44g) umfasst, die sich parallel zu zumindest einer der Horizontalwandungen (66a - 66g, 68a - 68g) erstreckt und zumindest drei Flächen (42a - 42g, 44a - 44g, 46a - 46g) aufweist, die zueinander zwei stumpfe Winkel (48a - 48g, 50a - 50g) einschließen.

2. Wischvorrichtung nach Anspruch 1, **dadurch gekennzeichnet, dass** der spitze Winkel (32a - 32g) weniger als 80° beträgt.

3. Wischvorrichtung nach Anspruch 1 oder 2, **dadurch gekennzeichnet, dass** zumindest eine der drei Flächen (42a - 42g, 44a - 44g, 46a - 46g) in einem montierten Zustand an der Wischleiste (40a - 40g) formschlüssig anliegt.

4. Wischvorrichtung nach einem der vorhergehenden Ansprüche, **dadurch gekennzeichnet, dass** das Halteelement (12a - 12c) zumindest ein Befestigungsmittel (18a - 18c, 20a - 20c) aufweist, das mit einem freien Ende (24a - 24c, 26a - 26c) einem Längsführungskanal (14a - 14c) des Halteelements (12a - 12c) zugewandt und dazu vorgesehen ist, einen Formschluss mit einem Windabweiserelement (22a - 22c) zu bilden.

5. Wischvorrichtung nach einem der vorhergehenden Ansprüche, **gekennzeichnet durch** ein Windabweiserelement (22a - 22g), das in einem Extrusionsverfahren hergestellt ist.

6. Wischvorrichtung nach Anspruch 5, **dadurch gekennzeichnet, dass** das Windabweiserelement (22d - 22g) am Halteelement (12d - 12g) im Bereich des Längsführungskanals (14d - 14g) zumindest teilweise seitlich anliegt.

7. Wischvorrichtung zumindest nach Anspruch 5, **dadurch gekennzeichnet, dass** das Windabweiserelement (22a; 22b; 22d - 22g) einen Längskanal (82a; 82b; 82d - 82g) aufweist, der einen dreieckigen Querschnitt umfasst.

## Claims

1. Wiping device, in particular a wiping device for a motor vehicle pane, comprising a retaining unit (10a - 10g) which has a retaining element (12a - 12g), wherein the retaining element (12a - 12g) comprises a keder track (70a - 70g), which is provided to receive a wiper strip (40a - 40g) positively, wherein at least one vertical wall (62a - 62g, 64a - 64g) of the keder track (70a - 70g) encloses an acute angle (32a - 32g, 34a - 34g) with at least one horizontal wall (66a - 66g, 68a - 68g) of the keder track (70a - 70g), **characterized by** an intermediate wall (56a - 56g) which adjoins a longitudinal guide channel (14a - 14g) of the retaining element (12a - 12g) and comprises the at least one surface (42a - 42g, 44a - 44g) which extends parallel to at least one of the horizontal walls (66a - 66g, 68a - 68g) and comprises at least three surfaces (42a - 42g, 44a - 44g, 46a - 46g) which enclose two obtuse angles (48a - 48g, 50a - 50g) relative to one another.

2. Wiping device according to Claim 1, **characterized in that** the acute angle (32a - 32g) is less than 80°.

3. Wiping device according to Claim 1 or 2, **characterized in that** at least one of the three surfaces (42a - 42g, 44a - 44g, 46a - 46g) in an assembled state bears positively against the wiper strip (40a - 40g).

4. Wiping device according to one of the preceding claims, **characterized in that** the retaining element (12a - 12c) has at least one fastening means (18a - 18c, 20a - 20c) which with a free end (24a - 24c, 26a - 26c) faces a longitudinal guide channel (14a - 14c) of the retaining element (12a - 12c) and is provided to form a positive connection with a spoiler element (22a - 22c).

5. Wiping device according to one of the preceding claims, **characterized by** a spoiler element (22a - 22g) which is produced in an extrusion process.

6. Wiping device according to Claim 5, **characterized in that** the spoiler element (22d - 22g) at least partially bears laterally against the retaining element (12d - 12g) in the region of the longitudinal guide channel (14d - 14g).

7. Wiping device at least according to Claim 5, **characterized in that** the spoiler element (22a; 22b; 22d - 22g) comprises a longitudinal channel (82a; 82b; 82d - 82g) which has a triangular cross section.

## Revendications

1. Dispositif d'essuie-glace, en particulier dispositif d'essuie-glace de pare-brise de véhicule automobile, comprenant une unité de retenue (10a à 10g) qui comporte un élément de retenue (12a à 12g), l'élément de retenue (12a à 12g) comprenant un bourrelet formant rail (70a à 70g) destiné à recevoir une baguette d'essuie-glace (40a à 40g) par complémentarité de formes, au moins une paroi verticale (62a à 62g, 64a à 64g) du bourrelet formant rail (70a à 70g) formant avec au moins une paroi horizontale (66a à 66g, 68a à 68g) du bourrelet formant rail (70a à 70g) un angle aigu (32a à 32g, 34a à 34g), **caractérisé par** une paroi intermédiaire (56a à 56g) qui est adjacente à un canal de guidage longitudinal (14a à 14g) de l'élément de retenue (12a à 12g) et qui comporte au moins une surface (42a à 42g, 44a à 44g) qui s'étend parallèlement à au moins une des parois horizontales (66a à 66g, 68a à 68g) et qui comporte au moins trois surfaces (42a à 42g, 44a à 44g, 46a à 46g) qui forment entre elles deux angles obtus (48a à 48g, 50a à 50g).

2. Dispositif d'essuie-glace selon la revendication 1, **caractérisé en ce que** l'angle aigu (32a à 32g) est inférieur à 80°.

3. Dispositif d'essuie-glace selon la revendication 1 ou 2, **caractérisé en ce que** l'une au moins des trois surfaces (42a à 42g, 44a à 44g, 46a à 46g) vient en appui, à l'état monté, sur la baguette d'essuie-glace (40a à 40g) par complémentarité de formes.

4. Dispositif d'essuie-glace selon l'une des revendications précédentes, **caractérisé en ce que** l'élément de retenue (12a à 12c) comporte au moins un moyen de fixation (18a à 18c, 20a à 20c) dont une extrémité libre (24a à 24c, 26a à 26c) est dirigée vers un canal de guidage longitudinal (14a à 14c) de l'élément de retenue (12a à 12c) et qui est destiné à former une liaison par complémentarité de formes avec un élément déflecteur de vent (22a à 22c).

5. Dispositif d'essuie-glace selon l'une des revendications précédentes, **caractérisé par** un élément déflecteur de vent (22a à 22g) qui est fabriqué dans un procédé d'extrusion.

6. Dispositif d'essuie-glace selon la revendication 5, **caractérisé en ce que** l'élément déflecteur de vent (22d à 22g) vient en appui au moins en partie latéralement sur l'élément de retenue (12d à 12g) dans la région du canal de guidage longitudinal (14d à 14g).

7. Dispositif d'essuie-glace selon la revendication 5, **caractérisé en ce que** l'élément déflecteur de vent (22a ; 22b ; 22d à 22g) comporte un canal longitudinal (82a ; 82b ; 82d à 82g) qui a une section transversale triangulaire.
